# EUROPEAN PATENT APPLICATION

(11) **EP 3 388 937 A1**
(43) Date of publication of application: **17.10.2018**
(21) Application number: 17207681.2
(22) Date of filing: 15.12.2017
(51) Int. Cl.: G06F 9/4401, H04L 12/24

(54) **LOCAL DISKS ERASING MECHANISM FOR POOLED PHYSICAL RESOURCES**

(30) Priority: 12.04.2017 US 201762484743 P; 15.09.2017 US 201715706212
(71) Applicant: Quanta Computer Inc., Taoyuan City 333 (TW)
(72) Inventor: Shih, Ching-Chih, 333 Taoyuan City (TW)
(74) Representative: Michalski Hüttermann & Partner Patentanwälte mbB

(57) **Abstract**

A network system is directed to the efficient management of computer resources, including removal of unused objects within a network system. The network system includes a plurality of processing nodes, where each processing node includes physical storage and a compute node. The compute node is configured to perform operations including receiving a signal to reboot in erase mode, reconfiguring, by a management controller associated with the compute node, the compute node to boot up in the erase mode; and rebooting in erase mode and performing an erase of the at least one processing node.

## Description

### CROSS-REFERENCE TO RELATED APPLICATIONS

This application claims priority to and the benefit of U.S. Provisional Patent Application No. 62/484,743, filed April 12, 2017 and entitled "LOCAL DISKS ERASING MECHANISM FOR POOLED PHYSICAL MACHINE".

### FIELD OF THE INVENTION

The present invention relates generally to the field of data security and more particularly to the efficient management of computer resources, including removal of unused objects within a network system.

### BACKGROUND

The advancement of computing technology brings improvements in functionality, features, and usability of network systems. Specifically, in modern network systems, all of the computer node resources are pooled together and dynamically allocated to each customer. The pooled computer resources differ from simply allocating a partial computer resource by a virtual machine (VM), rather a whole physical machine is allocated to a single customer. In a traditional VM, the VM not only allocates a VM image but it can also allocate or release a virtual disk resource from a cloud operating system (OS) by demand. The cloud OS can decide to destroy a virtual disk resource to prevent a new VM access to the virtual disk originally used by another customer.

In contrast, when a physical computer node is included within pooled resources, a data management system can allocate each physical computer node within the pooled resources to specific customers. The data management system can allocate a physical computer node that includes allocating the central processing unit (CPU) and memory. The data management system can also allocate all local disks of this physical machine to a user. In the event the user releases the allocated physical computer node, this resource can be released to the data management system and will be available for a new user.

Unfortunately, these benefits come with the cost of increased complexity in the data management system. One of the undesired consequences of increased system complexity is the introduction of inefficiencies in the use of computer resources. One example of such inefficiency is the maintained presence of a previous customer's local disks data. As the physical machines become a part of the pooled resources for sharing by multiple customers, a customer can create and store data into local disks of this physical machine. Once this machine is released for a new customer, the data management system is unable to erase the local disks of this physical machine without implementing a great deal of administrative resources and time. As a result, a new customer may access the data created by the previous customer.

### SUMMARY

Embodiments of the invention concern a network system and a computer-implemented method for rebooting a processing node. A network system according to the various embodiments can include a plurality of processing nodes. In some exemplary embodiments, the processing node can include a server. In some embodiments, the server can be configured to receive a signal to reboot in erase mode, reconfigure, by a management controller associated with the server, the server to boot up in the erase mode; and reboot in erase mode and perform an erase of the at least one processing node. In some exemplary embodiments, the server can also be configured to receive a notification from a data resource manager that the processing node is being released, wherein the data resource manager is configured to manage each of the processing nodes.

In some exemplary embodiments, receiving the signal to reboot in erase mode can include receiving a request, at the MC, to change a basic input/output system (BIOS) mode to a function for erasing the physical storage of the at least one processing node. Furthermore, the server can be configured to set, by the MC, the function to BIOS parameter area. In addition, the server can be configured to provide, by the MC, a command for BIOS boot mode. In some embodiments, the server can be configured to initiate the basic input/output system mode.

In alternative exemplary embodiments, receiving the signal to reboot in erase mode can include receiving a request, at the MC, to perform an emulated USB boot for erasing the physical storage of the at least one processing node. Furthermore, the server can be configured to prepare, by the MC, a disk erasing boot image from at least one of local or remote storage. In addition, performing an erase of the processing node can include initiating the emulated USB boot.

In alternative exemplary embodiments, receiving the signal to reboot in erase mode can include receiving a request, at the MC, to perform remote boot mode for erasing the physical storage of the at least one processing node. The remote boot mode can include Preboot Execution Environment (PXE), Hypertext Transfer Protocol (HTTP), or Internet Small Computer System Interface (iSCSI). In addition, performing the erase of the at least one processing node can include initiating the remote boot mode.

### BRIEF DESCRIPTION OF THE DRAWINGS

Figure 1 is a block diagram of a distributed processing environment in accordance with embodiments of the disclosure as discussed herein;
Figure 2 is a schematic block diagram of the compute node of Figure 1 in accordance with some embodiments of the disclosure;
Figure 3 is a block diagram of the compute node of Figure 2 configured in accordance with some embodiments of the disclosure;
Figure 4 is a block diagram of the compute node of Figure 2 configured in accordance with some embodiments of the disclosure;
Figure 5 is a block diagram of an exemplary network environment in accordance with some embodiments of the disclosure; and
Figure 6 is a flow diagram exemplifying the process of rebooting a compute node in accordance with an embodiment of the disclosure.

### DETAILED DESCRIPTION

The present invention is described with reference to the attached figures, wherein like reference numerals are used throughout the figures to designate similar or equivalent elements. The figures are not drawn to scale and they are provided merely to illustrate the instant invention. Several aspects of the invention are described below with reference to example applications for illustration. It should be understood that numerous specific details, relationships, and methods are set forth to provide a full understanding of the invention. One having ordinary skill in the relevant art, however, will readily recognize that the invention can be practiced without one or more of the specific details or with other methods. In other instances, well-known structures or operations are not shown in detail to avoid obscuring the invention. The present invention is not limited by the illustrated ordering of acts or events, as some acts may occur in different orders and/or concurrently with other acts or events. Furthermore, not all illustrated acts or events are required to implement a methodology in accordance with the present invention.

In order to resolve the issue of the need for erasing the local disks of the previously used physical machines, preferred embodiments of the present invention provide a network system and a computer-implemented method for rebooting a processing node.

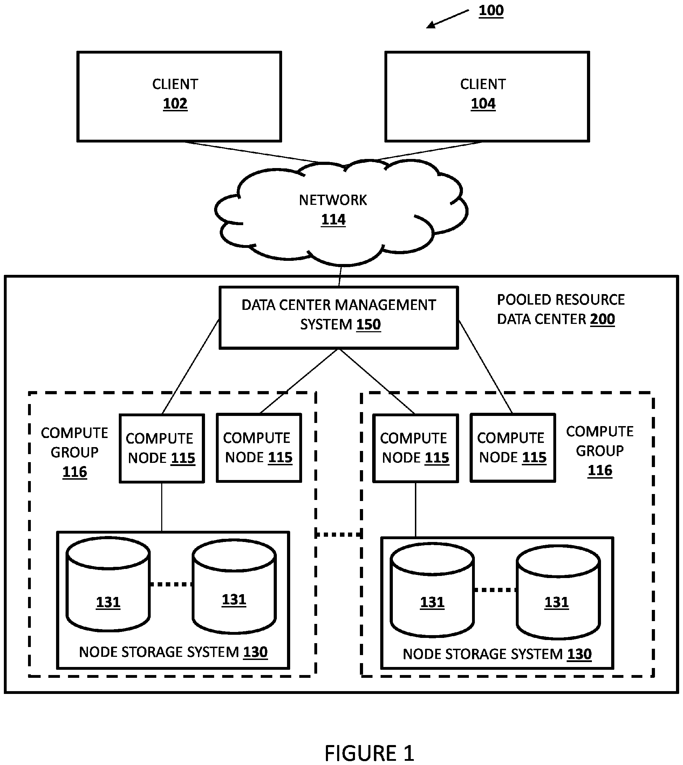

Referring now to the drawings, wherein like reference numerals refer to like features throughout the several views, there is shown in Figure 1 a block diagram of an example of an exemplary pooled processing environment 100, in accordance with some embodiments of the present disclosure. The network environment 100 includes clients 102 and 104. The clients 102, 104 can include remote administrators that interface with the pooled resource data center 200 to assign resources out of pool. Alternatively, the clients 102, 104 can simply be client data centers requiring additional resources. The various components in the distributed processing environment 100 are accessible via a network 114. This network 114 can be a local area network (LAN), a wide area network (WAN), virtual private network (VPN) utilizing communication links over the internet, for example, or a combination of LAN, WAN and VPN implementations can be established. For the purposes of this description, the term network should taken broadly to include any acceptable network architecture. The network 114 interconnects various clients 102, 104. Also attached to the network 114 is a pooled resource data center 200.

As shown in FIG. 1, the pooled resource data center 200 includes any number of compute groups 116 and a data center management system 150. Each compute group 116 can includes any number of compute nodes 115 that are coupled to the network 114 via a data center management system 150. Each of the computer nodes 115 can include one or more storage systems 130. Two compute groups 116 are shown for simplicity of discussion. A compute group 116 can be, for example, a server rack having numerous chassis installed thereon. Each chassis can include one or more compute nodes of the compute nodes 115..

The storage system 130 can include a storage controller (not shown) and a number of node storage devices (or storage containers) 131, such as hard drive disks (HDDs). Alternatively, some or all of the node storage devices 131 can be other types of storage devices, such as flash memory, solid-state drives (SSDs), tape storage, etc. However, for ease of description, the storage devices 131 are assumed to be HDDs herein and the storage system 130 is assumed to be a disk array.

The data center management system 150 can perform various functions. First, the data center management system 150 receives requests for computing resources from clients 102 and 104 and assigns portions of the computing resources (i.e., one of more of compute nodes 115) in the pooled resources data center 200 to the requesting client in accordance with the request. Second, based on the assignment, the data center management system 150 can coordinate functions relating to the processing of jobs in accordance with the assignments. This coordination function may include one or more of: receiving a job from one of clients 102 and 104, dividing each job into tasks, assigning or scheduling the tasks to one or more compute nodes 115 associated with the compute nodes associated with client, monitoring progress of the tasks, receiving the divided tasks results, combining the divided tasks results into a job result, and reporting and sending the job result to the one of clients 102 and 104. Finally, the data center management system 150 receives requests to release computing resources from clients 102 and 104 and unassigns portions of the computing resources in accordance with the request. Thereafter the released portions of the computing resources are available for use by other clients.

However, in some embodiments, the data center management system 150 can have a more limited role. For example, the data center management system 150 can be used merely to route jobs and corresponding results between the requesting one of clients 102 and 104 and the assigned computing resources. Other functions listed above can be performed at the one of clients 102 and 104 or by the assigned computing resources.

In one embodiment, the data center management system 150 can include, for example, one or more HDFS Namenode servers. The data center management system 150 can be implemented in special-purpose hardware, programmable hardware, or a combination thereof. As shown, the data center management system 150 is illustrated as a standalone element. However, the data center management system 150 can be implemented in a separate computing device. Further, in one or more embodiments, the data center management system 150 may alternatively or additionally be implemented in a device which performs other functions, including within one or more compute nodes. The data center management system 150 can be implemented in special-purpose hardware, programmable hardware, or a combination thereof. Moreover, although shown as a single component, the data center management system 150 can be implemented using one or more components.

The clients 102 and 104 can be computers or other processing systems capable of accessing the pooled resource data center 200 over the network 114. The clients 102 and 104 can access the pooled resource data center 200 over the network 114 using wireless or wired connections supporting one or more point-to-point links, shared local area networks (LAN), wide area networks (WAN), or other access technologies.

As noted above, the data center management system 150 performs the assignment and (optionally) scheduling of tasks to compute nodes 115. This assignment and scheduling can be performed based on knowledge of the capabilities of the compute nodes 115. In some embodiments, the compute nodes 115 can be substantially identical. However, in other embodiments, the capabilities (e.g., computing and storage) of the compute nodes 115 can vary. Thus, the data center management system 150, based on knowledge of the compute groups 116 and the associated storage system(s) 130 attempts to assign the compute nodes 115, at least in part, to improve performance. In some embodiments, the assignment can also be based on location. That is, if a client 102 or 104 requires a large number of compute nodes 115, the data center management system 150 can assign compute nodes 115 within a same or an adjacent compute group to minimize latency.

Compute nodes 115 may be any type of microprocessor, computer, server, central processing unit (CPU), programmable logic device, gate array, or other circuitry which performs a designated processing function (i.e., processes the tasks and accesses the specified data segments). In one embodiment, compute nodes 115 can include a cache or memory system that caches distributed file system meta-data for one or more data storage objects such as, for example, logical unit numbers (LUNs) in a storage system. The compute nodes 115 can also include one or more interfaces for communicating with networks, other compute nodes, and/or other devices. In some embodiments, compute nodes 115 may also include other elements and can implement these various elements in a distributed fashion.

The node storage system 130 can include a storage controller (not shown) and one or more disks 131. In one embodiment, the disks 131 may be configured in a disk array. For example, the storage system 130 can be one of the E-series storage system. The E-series storage system products include an embedded controller (or storage server) and disks. The E-series storage system provides for point-to-point connectivity between the compute nodes 115 and the storage system 130. In one embodiment, the connection between the compute nodes 115 and the storage system 130 is a serial attached SCSI (SAS). However, the compute nodes 115 may be connected by other means known in the art such as, for example over any switched private network.

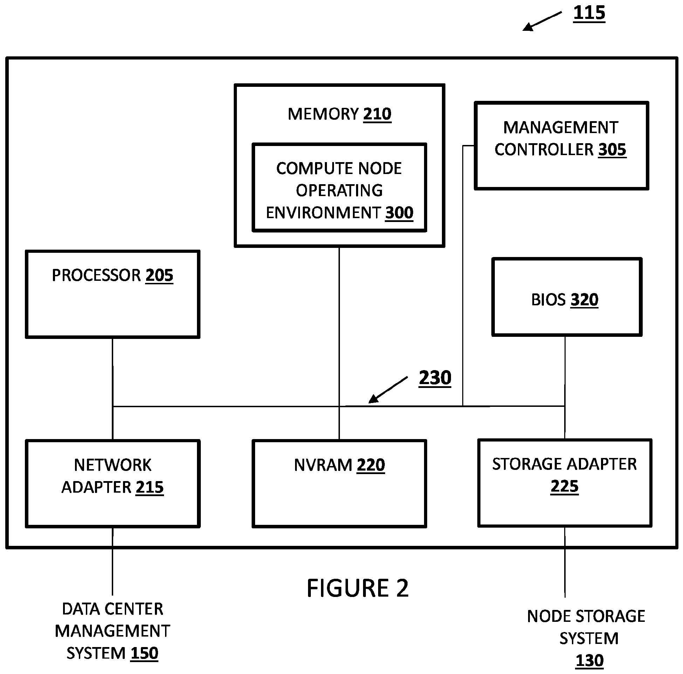

Figure 2 is a schematic block diagram of a compute node 115 of Figure 1 in accordance with some embodiments of the disclosure. The compute node 115 can include a processor 205, a memory 210, a network adapter 215, a nonvolatile random access memory (NVRAM) 220, a storage adapter 225, and a management controller 305, interconnected by system bus 235. Although one exemplary architecture is illustrated in Figure 2, it understood that other architectures are possible in the various embodiments.

The processor (e.g., central processing unit (CPU)) 205 can be a chip on a motherboard that can retrieve and execute programming instructions stored in the memory 210. The processor 205 can be a single CPU with a single processing core, a single CPU with multiple processing cores, or multiple CPUs. System bus 230 can transmit instructions and application data between various computer components such as the processor 205, memory 210, storage adapter 225, and network adapter 215. The memory 210 can include any physical device used to temporarily or permanently store data or programs, such as various forms of random-access memory (RAM). The storage device 130 can include any physical device for non-volatile data storage such as a HDD, a flash drive, or a combination thereof. The storage device 130 can have a greater capacity than the memory 210 and can be more economical per unit of storage, but can also have slower transfer rates.

Contained within the memory 210 is a compute node operating environment 300 that implements a file system to logically organize the information as a hierarchical structure of directories and files on the disks as well as provide an environment for performing tasks requested by a client. In the illustrative embodiment, the memory 210 comprises storage locations that are addressable by the processor and adapters for storing software program code. The operating system 300 contains portions, which are typically resident in memory and executed by the processing elements. The operating system 300 functionally organizes the files by inter alia, invoking storage operations in support of a file service implemented by the compute node 115.

The network adapter 215 comprises a mechanical, electrical and signaling circuitry needed to connect the compute node 115 to clients 102, 104 over network 114. Moreover, the client 102 may interact with the compute node 115 in accordance with the client/server model of information delivery. That is, the client may request the services of the compute node 115, and the compute node 115 may return the results of the services requested by the client, by exchanging packets defined by an appropriate networking protocol. The storage adapter 225 operates with the compute node operating environment 300 executing at the compute node 115 to access information requested by the client. Information may be stored on the storage devices 130 that is attached via the storage adapter 225 to the compute node 115. The storage adapter 225 includes input/output (I/O) interface circuitry that couples to the disks over an I/O interconnect arrangement, such as a Fibre Channel serial link topology. The information is retrieved by the storage adapter and, if necessary, processed by the processor 205 (or the adapter 225 itself) prior to being forwarded over the system bus 230 to the network adapter 215, where information is formatted into appropriate packets and returned to the client 102.

The management controller 305 can be a specialized microcontroller embedded on the motherboard of the computer system. For example, the management controller 305 can be a baseboard management controller (BMC) or a rack management controller (RMC). The management controller 305 can manage the interface between system management software and platform hardware. Different types of sensors built into the system can report to the management controller 305 on parameters such as temperature, cooling fan speeds, power status, operating system status, etc. The management controller 305 can monitor the sensors and have the ability to send alerts to an administrator via the network adapter 215 if any of the parameters do not stay within preset limits, indicating a potential failure of the system. The administrator can also remotely communicate with the management controller 305 to take some corrective action such as resetting or power cycling the system to restore functionality. For the purpose of this disclosure, the management controller 305 is represented by a BMC.

The BIOS 320 can include a Basic Input/Output System or its successors or equivalents, such as an Extensible Firmware Interface (EFI) or Unified Extensible Firmware Interface (UEFI). The BIOS 320 can include a BIOS chip located on a motherboard of the computer system storing a BIOS software program. The BIOS 320 can store firmware executed when the computer system is first powered on along with a set of configurations specified for the BIOS 320. The BIOS firmware and BIOS configurations can be stored in a non-volatile memory (e.g., NVRAM) 220 or a ROM such as flash memory. Flash memory is a non-volatile computer storage medium that can be electronically erased and reprogrammed.

The BIOS 320 can be loaded and executed as a sequence program each time the compute node 115 (shown in FIG. 2) is started. The BIOS 320 can recognize, initialize, and test hardware present in a given computing system based on the set of configurations. The BIOS 320 can perform self-test, such as a Power-on-Self-Test (POST), at the compute node 115. This self-test can test functionality of various hardware components such as hard disk drives, optical reading devices, cooling devices, memory modules, expansion cards and the like. The BIOS can address and allocate an area in the memory 210 to store an operating system. The BIOS 320 can then give control of the computer system to the operating system (e.g., the compute node operating environment 300).

The BIOS 320 of the compute node 115 (shown in FIG. 2) can include a BIOS configuration that defines how the BIOS 320 controls various hardware components in the computer system. The BIOS configuration can determine the order in which the various hardware components in the network environment 100 are started. The BIOS 320 can provide an interface (e.g., BIOS setup utility) that allows a variety of different parameters to be set, which can be different from parameters in a BIOS default configuration. For example, a user (e.g., an administrator) can use the BIOS 320 to specify clock and bus speeds, specify what peripherals are attached to the computer system, specify monitoring of health (e.g., fan speeds and CPU temperature limits), and specify a variety of other parameters that affect overall performance and power usage of the computer system.

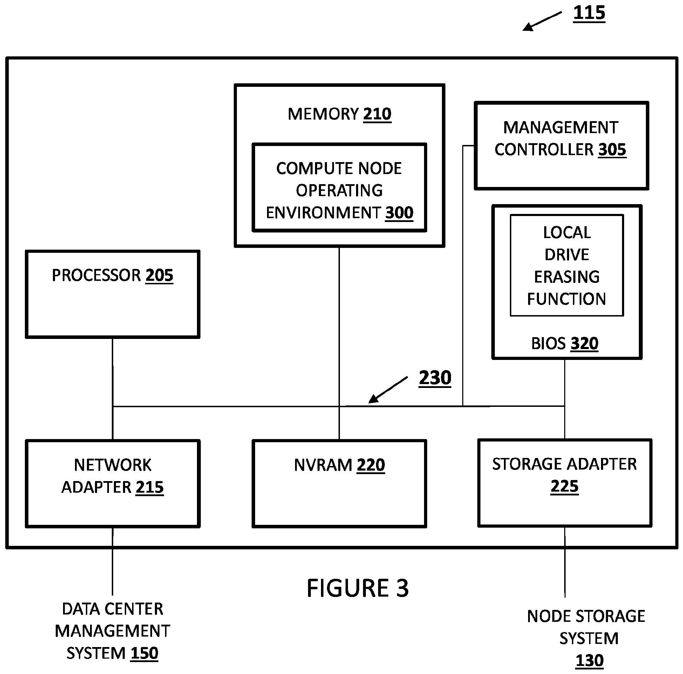

One of the concerns with using pooled compute resources, such as those described in Figures 1 and 2, is that once one of compute nodes 115 is released for use by a new client, there is typically no mechanism to erase all of the data that was stored at the compute node 115. Thus, a new client may access that data, which may raise significant data privacy concerns. In view of this, the various embodiments are directed to a mechanism that ensures erasure of data at a compute node prior to assignment to a new client. This is described below with respect to Figures 3-6.

A first methodology is illustrated below with respect to Figure 3. Figure 3 shows a configuration for a compute node 115 in accordance with an exemplary embodiment. In this configuration, the BIOS 320 is operable to cause erasure at the compute node 115. In particular, , the BIOS 320 is configured to provide a Boot Option, where the boot option can enable the BIOS 320 to boot to a special BIOS mode to erase all of the local disks of this physical storage device 130.

In operation, the data center management system 150 can determine that the local drive 131 associated with a compute node 115 should be erased if this allocated compute node is released to the compute pool 116. Alternatively, the data center management system 150 can erase the local drive 131 in light of a system failure. In some exemplary embodiments of the disclosure, upon releasing the physical storage device the data center management system 150 is configured to send a request to the management controller 305 to change a BIOS 320 boot mode to a "Disk Erasing Mode."

In response to the request, the management controller 305 can set the boot mode to "Disk Erasing Mode" to a BIOS 320 parameter area. Alternatively, in response to the request, the management controller 305 can provide a command for BIOS learning Boot mode. In an exemplary embodiment, the data center management system 150 can request a system power on to enable the BIOS 320 to boot the "Disk Erasing Mode" implementing the local drive erasing function. In an alternative embodiment of the disclosure, the management controller 305 can request a system power on to enable the BIOS 320 to boot the "Disk Erasing Mode." During "Disk Erasing Mode," the BIOS can send commands to all HDDs/SSDs to do quick security erasing or provide fill data at disks within the released compute node 115.

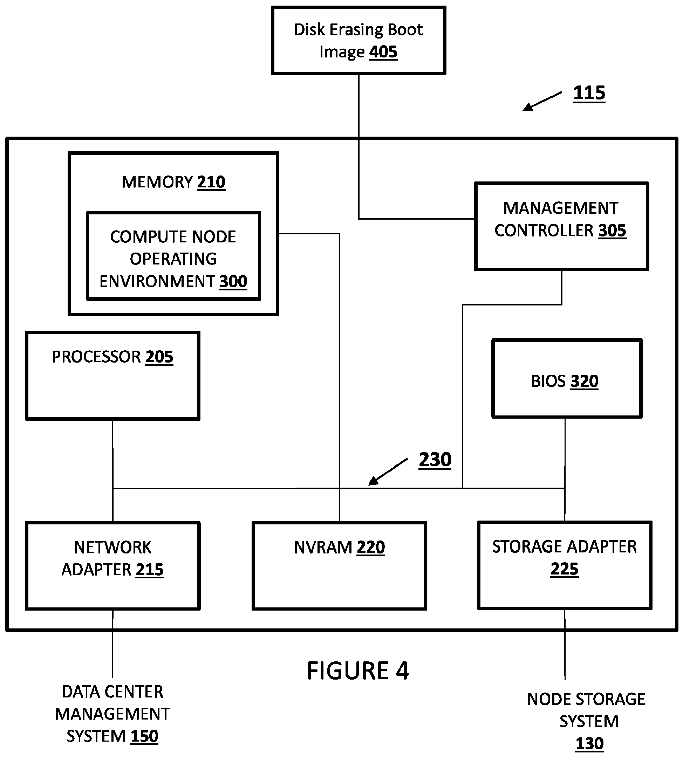

A second methodology is illustrated below with respect to Figure 4. Figure 4 shows a configuration for a compute node 115 in accordance with an exemplary embodiment. In this exemplary embodiment discussed herein, the management controller 305 is configured to boot a disk erasing boot image which loads an operating system designed to erase all of the disks attached to the compute node 115.

In operation, the data center management system 150 can determine that a physical storage device 130 should be released. This determination can be due to a client 102 or 104 releasing a compute node 115 back to compute node pool 116. Alternatively, the data center management system 150 can release a compute node 115 in light of a system failure. In some exemplary embodiments of the disclosure, upon releasing the physical storage device the data center management system 150 is configured to send a request to the management controller 305 to use the disk erasing boot image 405. In some embodiments, implementing the disk erasing boot image 405 involves configuring the management controller 305 to emulate a USB drive storing this image. In some embodiments, the management controller 305 can prepare the disk erasing boot image 405 from a local storage. In alternative embodiments, in response to the request the BMC 305 can prepare the disk erasing boot image 405 from a remote storage.

In an exemplary embodiment, the data center management system 150 can then request a system power on using the emulated USB drive so as to boot the disk erasing boot image 405. In an alternative embodiment of the disclosure, the management controller 305 can request a system power on to enable a BMC emulated USB boot by the disk erasing boot image 405. In some embodiments, this power on is provided by configuring the BIOS 305 to boot from the USB drive the management controller 305 is emulating. Once booted, the disk erasing boot image 405 can send commands to all HDDs/SSDs to do quick security erasing or fill data to disks for erasing within the released physical storage device 130. Thereafter, this boot image can cause a normal reboot so that the compute node 115 can resume normal operations.

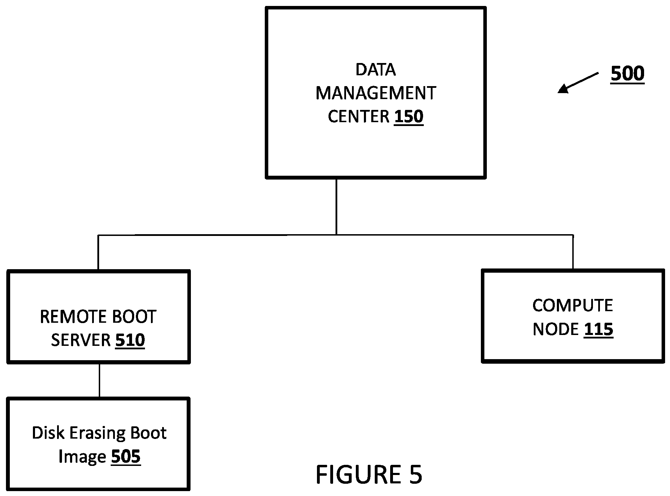

A third methodology is illustrated below with respect to Figure 5. Figure 5 is a block diagram of an exemplary network environment 500 in accordance with some embodiments of the disclosure. Similar to Figure 1, the exemplary network environment 500 contains a data center management system 150 and a compute node 115. Further included in the exemplary network environment 500 are a remote boot server 510 and a disk erasing boot image 505. Each component herein is interconnected around a network similar to the network 114. The network can be a local area network (LAN), a wide area network (WAN), virtual private network (VPN) utilizing communication links over the internet, for example, or a combination of LAN, WAN and VPN implementations can be established. For the purposes of this description, the term network should be taken broadly to include any acceptable network architecture. In this exemplary embodiment discussed herein, the remote boot server 510 is configured to provide a disk erasing boot image 505, where once the compute node 115 is booted by this image it can erase all of the disks of this physical storage device 130.

In operation, the data center management system 150 can determine that a physical storage device 130 should be released. In some exemplary embodiments of the disclosure, upon releasing the physical storage device the data center management system 150 is configured to send a request to change a boot mode to a remote boot mode and configure the required boot parameters. Exemplary boot modes found within the remote boot server 510 can include Preboot Execution Environment (PXE), Hypertext Transfer Protocol (HTTP), and Internet Small Computer System Interface (iSCSI). One of ordinary skill in the art would understand that other remote boot modes can be implemented herein.

In an exemplary embodiment, the data center management system 150 can setup the remote boot server 510 for the released physical storage device 130 to implement a disk erasing boot. After setting the remote boot server 510, the system can be booted by the disk erasing boot image 505 from the remote boot server 510. The disk erasing boot image 505 can send commands to all HDDs/SSDs to do quick security erasing or fill data to disks for erasing within the released physical storage device 130. Thereafter, this remote boot image can cause a normal reboot so that the compute node 115 can resume normal operations.

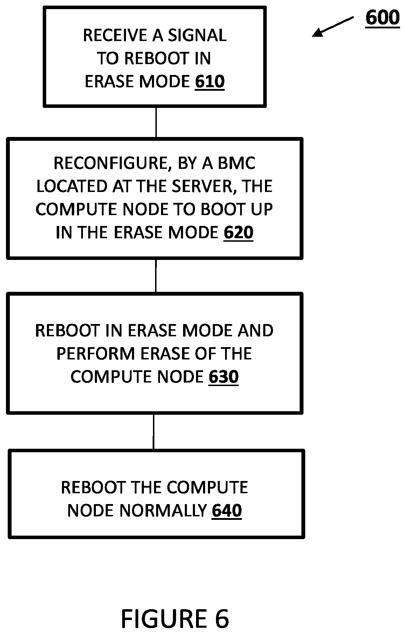

A general flow chart for carrying out the method 600 in accordance with the exemplary pooled resource data center 200 of the preceding figures is shown in Figure 6. As detailed above, the network system according to the various embodiments can include a plurality of compute groups 116, each containing one or more compute nodes 115 having storage device 131 defining a node storage system 130.. At step 610, the compute node 115 can be configured to receive a signal to reboot in erase mode. In some exemplary embodiments, receiving the signal to reboot in erase mode can include receiving a request, at a management controller, to change a BIOS mode to a function for erasing the physical storage of the at least one processing node. This is indicated in Figure 3. In alternative exemplary embodiments, receiving the signal to reboot in erase mode can include receiving a request, at a management controller, to perform an emulated USB boot for erasing the physical storage of the at least one processing node. This is indicated in Figure 4. In alternative exemplary embodiments, receiving the signal to reboot in erase mode can include receiving a request, at a management controller, to perform remote boot mode for erasing the physical storage of the at least one processing node. The remote boot mode can include Preboot Execution Environment (PXE), Hypertext Transfer Protocol (HTTP), or Internet Small Computer System Interface (iSCSI). This is indicated in Figure 5.

At step 620, the compute node 115 can be configured to reconfigure, by the management controller, the compute node 115 to boot up in the erase mode. As indicated in Figure 3, the compute node 115 can be configured to set, by a management controller, a function to the BIOS parameter area for the erase mode. Alternatively, and as discussed in Figure 4, the compute node 115 can be configured to prepare and load an emulated drive (e.g., USB emulated drive), by a management controller, a disk erasing boot image from a local or remote storage.

At step 630, the compute node 115 can be configured to reboot in erase mode and perform an erase of the at least one processing node. In some embodiments, performing an erase of the processing node can include initiating the emulated USB boot via a management controller. In an alternative embodiment, performing the erase of the at least one processing node can include initiating the remote boot mode. In some exemplary embodiments, the compute node 115 can also be configured to receive a notification from the data center management system 150 that the processing node is being released, wherein the data center management system 150 is configured to manage each of the processing nodes.

Finally, at step 640, the computing node can be configured to reboot normally and resume normal operations.

The various illustrative logical blocks, modules, and circuits described in connection with the disclosure herein can be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor can be a microprocessor, but in the alternative, the processor can be any conventional processor, controller, microcontroller, or state machine. A processor can also be implemented as a combination of computing devices, e.g., a combination of a DSP and a microprocessor, a plurality of microprocessors, one or more microprocessors in conjunction with a DSP core, or any other such configuration.

The operations of a method or algorithm described in connection with the disclosure herein can be embodied directly in hardware, in a software module executed by a processor, or in a combination of the two. A software module can reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium can be integral to the processor. The processor and the storage medium can reside in an ASIC. The ASIC can reside in a user terminal. In the alternative, the processor and the storage medium can reside as discrete components in a user terminal.

In one or more exemplary designs, the functions described can be implemented in hardware, software, firmware, or any combination thereof. If implemented in software, the functions can be stored on or transmitted over as one or more instructions or code on a non-transitory computer-readable medium. Non-transitory computer-readable media includes both computer storage media and communication media including any medium that facilitates transfer of a computer program from one place to another. A storage media can be any available media that can be accessed by a general purpose or special purpose computer. By way of example, and not limitation, such computer-readable media can include RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Disk and disc, as used herein, includes compact disc (CD), laser disc, optical disc, digital versatile disc (DVD), floppy disk and blue ray disc where disks usually reproduce data magnetically, while discs reproduce data optically with lasers. Combinations of the above should also be included within the scope of non-transitory computer-readable media.

While various embodiments of the present invention have been described above, it should be understood that they have been presented by way of example only, and not limitation. Numerous changes to the disclosed embodiments can be made in accordance with the disclosure herein without departing from the scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

The terminology used herein is for the purpose of describing particular embodiments only and is not intended to be limiting of the invention. As used herein, the singular forms "a", "an" and "the" are intended to include the plural forms as well, unless the context clearly indicates otherwise. Furthermore, to the extent that the terms "including", "includes", "having", "has", "with", or variants thereof are used in either the detailed description and/or the claims, such terms are intended to be inclusive in a manner similar to the term "comprising."

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

## Claims

1. A network system, comprising:
a plurality of processing nodes comprising physical storage, wherein at least one of the processing nodes comprises a compute node configured to perform operations comprising:
receiving a signal to reboot in an erase mode;
reconfiguring, by a management controller (MC) associated with the compute node, for the compute node to boot up in the erase mode; and
rebooting in the erase mode and performing an erase of the at least one processing node.

2. The network system of claim 1, further comprising receiving notification from a data resource manager that the processing node is being released, wherein the data resource manager is configured to manage each of the processing nodes.

3. The network system of claim 1 or 2, wherein receiving the signal to reboot in the erase mode comprises receiving a request, at the MC, to change a basic input/output system (BIOS) mode to a function for erasing the physical storage of the at least one processing node.

4. The network system of any of claims 1 to 3, further comprising setting, by the MC, the function to a BIOS parameter area, and or providing, by the MC, a command for BIOS learning boot mode, and/or performing an erase of the at least one processing node comprises initiating the basic input/output system mode.

5. The network system of any of claims 1 to 4, wherein receiving the signal to reboot in erase mode comprises receiving a request, at the MC, to perform an emulated USB boot for erasing the physical storage of the at least one processing node.

6. The network system of claim 5, further comprising preparing, by the MC, a Disk Erasing Boot Image from at least one of a local or remote storage.

7. The network system of any of claims 1 to 6, wherein performing an erase of the at least one processing node comprises initiating the emulated USB boot.

8. The network system of claim 1, wherein receiving the signal to reboot in erase mode comprises receiving a request, at the MC, to perform a remote boot mode for erasing the physical storage of the at least one processing node.

9. The network system of claim 8, wherein the remote boot mode comprises at least one of Preboot Execution Environment (PXE), Hypertext Transfer Protocol (HTTP), and Internet Small Computer System Interface (iSCSI), or performing erase of the at least one processing node comprises initiating the remote boot mode.

10. A computer-implemented method for rebooting a processing node comprising a compute node configured to perform operations comprising:
receive a signal to reboot in an erase mode;
reconfigure, by a management controller (MC) associated with the compute node, compute node to boot up in the erase mode; and
reboot in erase mode and performing erase of the at least one processing node.

11. The computer-implemented method of claim 10, wherein receiving the signal to reboot in the erase mode comprises receiving a request, at the MC, to change a basic input/output system (BIOS) mode to a function for erasing the physical storage of the at least one processing node, and/or further comprising:
setting, by the MC, the function to a BIOS parameter area; and
providing, by the MC, a command for a BIOS learning boot mode, and/or wherein performing erase of the at least one processing node comprises initiating the basic input/output system mode.

12. The computer-implemented method of claim 10 or 11, wherein receiving the signal to reboot in the erase mode comprises receiving a request, at the MC, to perform an emulated USB boot for erasing the physical storage of the at least one processing node.

13. The computer-implemented method of any of claims 10 to 12, further comprising preparing, by the MC, a disk erasing boot image from at least one of a local or remote storage.

14. The computer-implemented method of any of claims 10 to 13, wherein receiving the signal to reboot in the erase mode comprises receiving a request, at the MC, to perform a remote boot mode for erasing the physical storage of the at least one processing node, wherein the remote boot mode comprises at least one of Preboot Execution Environment (PXE), iPXE, Hypertext Transfer Protocol (HTTP), and Internet Small Computer System Interface (iSCSI).

15. The computer-implemented method of any of claims 10 to 14, wherein performing erase of the at least one processing node comprises initiating the remote boot mode.
